# EUROPÄISCHE PATENTSCHRIFT

(11) **EP 1 756 451 B1**
(45) Veröffentlichungstag und Bekanntmachung des Hinweises auf die Patenterteilung: **26.03.2008**
(21) Anmeldenummer: 05761660.9
(22) Anmeldetag: 21.07.2005
(51) Int. Cl.: F16H 63/18

(54) **NUTFOLGER FÜR EINE SCHALTWALZE EINES STUFENGETRIEBES**
GROOVE FOLLOWER FOR A GEAR SELECTOR DRUM OF A MULTISPEED TRANSMISSION
SUIVEUR DE RAINURE POUR BARILLET DE SELECTION D'UNE BOITE DE VITESSES

(30) Priorität: 22.10.2004 WO PCT/DE2004/016475
(43) Veröffentlichungstag der Anmeldung: 28.02.2007
(73) Patentinhaber: GETRAG Getriebe- und Zahnradfabrik Hermann Hagenmeyer GmbH & Cie KG, 74199 Untergruppenbach (DE)
(72) Erfinder: KAPP, Stefan, 74399 Walheim (DE); PALME, Andreas, 74081 Heilbronn (DE)
(74) Vertreter: Wegener, Markus
(86) Internationale Anmeldenummer: PCT/EP2005/007939
(87) Internationale Veröffentlichungsnummer: WO 2006/045360

(56) Entgegenhaltungen:
- DE-A1- 19 924 335
- US-A- 5 735 176

## Beschreibung

Die vorliegende Erfindung betrifft einen Nutfolger zum Zusammenwirken mit einer Schaltnut einer Schaltwalze eines Stufengetriebes für ein Kraftfahrzeug, wobei der Nutfolger eine Höhenballigkeit und eine Längsballigkeit aufweist, und die Schaltnut einen Wirkdurchmesser definiert, entlang dem der Nutfolger in einem Zustand, bei dem der Nutfolger in die Schaltnut eingreift, geleitet werden soll, und wobei die Gesamtheit aller Scheitelpunkte der Höhenballigkeit eine Leitkurve entlang des Umfangs des Nutfolgers bildet.

Nutfolger, insbesondere Gleitsteine, Rollen oder ähnliche Kurvenfolger, sind im Stand der Technik allgemein bekannt.

Der Nutfolger wirkt dabei mit einer Schaltnut einer Schaltwalze zum Ein- bzw. Auslegen eines Getriebeganges zusammen. Schaltwalzen sind im Stand der Technik, wie er z.B. durch die gattungsbildende DE 199 24 335 A definiert wird, allgemein bekannt. Schaltwalzen weisen eine Vertiefung entlang ihres Umfangs auf, die sog. Schaltnut. In der Schaltnut wird der axial verschiebliche Nutfolger geführt bzw. geleitet. Bei Drehbewegungen der Schaltwalze, die in der Regel zum sequenziellen Schalten eines Stufengetriebes dienen, kann der Nutfolger folglich axial bewegt werden. Der Nutfolger wirkt ferner beispielsweise mit einer sog. Schaltgabel zusammen, wobei die Schaltgabel wiederum mit einer Schaltmuffe gekoppelt ist, mit deren Hilfe ein Gangwechsel eingeleitet werden kann. Die Schaltwalze stellt somit eine Stellvorrichtung in einem Stufengetriebe dar.

Die Schaltwalzen selbst werden mittels eines Stellantriebs, wie z.B. einem Motor, insbesondere Elektromotor, angetrieben. Soll nun ein Gang eingelegt werden, der mit dem Nutfolger gekoppelt ist, wird die Schaltwalze und somit auch die Schaltnut mit Hilfe des Elektromotors gedreht. Die Steuernut weist kurvenförmige Bereiche auf, die auch Schaltzacken bzw. -nocken genannt werden, auf Grund derer der Nutfolger axial versetzt wird. In diesen kurvenförmigen Bereichen wird die normalerweise in Umfangsrichtung gerade verlaufende Schaltnut in axialer Richtung versetzt.

In der Schaltnut können mehrere, verschiedenen Gängen zugeordnete Nutfolger geführt werden. Ein einzelner Nutfolger kann ggf. auch mehreren Gängen zugeordnet sein, nämlich derart, dass eine Axialverschiebung des Nutfolgers aus einer Neutralposition in eine erste axiale Richtung einen Gang einlegt und eine Axialverschiebung des Nutfolgers aus der Neutralposition in die entgegengesetzte Axialrichtung einen anderen Gang einlegt.

Aus dem Stand der Technik sind Nutfolger, insbesondere Gleitsteine, bekannt, die eine vorbestimmte, konstante Höhe H aufweisen. Ein solcher Gleitstein wird nachfolgend noch detaillierter beschrieben werden. Die Oberseite und die Unterseite eines solchen Nutfolgers sind in der Regel eben und parallel zueinander ausgebildet.

Die Schaltnut der Schaltwalze ist jedoch, in Achsrichtung der Schaltwalze betrachtet, im Wesentlichen kreisrund ausgebildet.
Die kreisrunde Form der Schaltnut bei einem Schnitt senkrecht zur Schaltwalzenachse ergibt sich aus dem rotationssymmetrischen Aufbau der Schaltwalze.

Die Schaltwalze bzw. die Schaltnut definiert einen sog. Wirkdurchmesser, entlang dem sich ein Kontakt zwischen Nutfolger und Schaltwalzennut bzw. deren Flanken idealerweise ausbildet. Der Wirkdurchmesser ist ein Funktionsparameter, auf dem die theoretische Auslegung der Schaltwalzengeometrie und somit der gesamten Aktuatorik basiert.

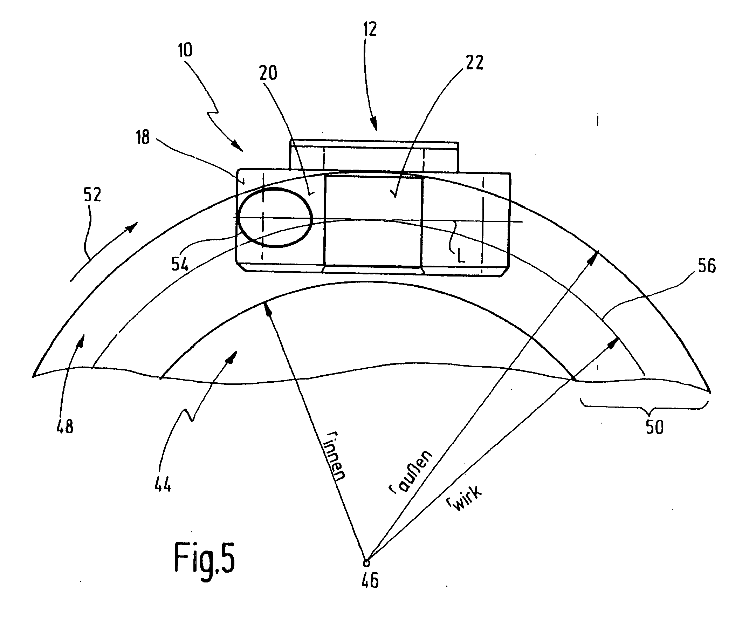

Setzt man nun einen Nutfolger gemäß dem Stand der Technik in die Schaltnut ein, so schmiegen sich der Nutfolger und die Schaltwalze nicht optimal aneinander, da der Nutfolger dem idealen Kontaktpunkt des Nutfolgers mit der Schaltnut, d.h. der Linie des Wirkdurchmessers, "voreilt" (vgl. Fig. 5).

Der Nutfolger, insbesondere ein Gleitstein, berührt die seitlichen Flanken der Schaltnut bevorzugt oberhalb des Wirkdurchmessers.

Dies kann zu Beschädigungen und Funktionsausfällen in hoch belasteten Bereichen, wie z.B. am Synchronisationspunkt und Durchschaltpunkt, der Schaltwalzennut führen.

Ferner ist die Hertzsche Pressung zu berücksichtigen. Unter der Hertzschen Pressung versteht man höchste mechanische Spannungen, die in der Mitte von sich berührenden Flächen zweier elastischer Körper herrschen. Werden zwei elastische Körper mit gewölbter Oberfläche, wie z.B. Zylinder oder Kugeln, gegeneinander gepresst, dann berühren sie sich (theoretisch) nur linien- bzw. punktförmig. Durch die Elastizität der Körper entsteht an der Berührungsstelle jedoch eine Abplattung bzw. eine Berührungsfläche. Entlang der Berührungsfläche entsteht in beiden Körpern eine charakteristische Spannungsverteilung, wobei die Spannung stets in der Mitte der Berührfläche am höchsten ist.

Berühren sich zwei Kugeln, eine Kugel und eine Ebene oder zwei gekreuzte Zylinder, so entsteht eine Berührungs- bzw. Druckellipse. Bei Berührung zweier paralleler Zylinder oder eines Zylinders mit einer Ebene entsteht eine linienförmige Berührungsfläche. Man spricht dann auch von Walzenpressung.

Nach den Theorien des deutschen Physikers Heinrich Hertz können Größe und Form der Berührungsflächen sowie die Höhe und Verteilung der mechanischen Spannungen unter den Berührungsflächen berechnet werden. Nach Hertz wird die höchste mechanische Spannung, die in der Mitte der Berührungsfläche herrscht, auch Hertzsche Pressung genannt.

Die Höhe der Hertzschen Pressung hängt von der Kraft ab, mit der die beiden Körper auf einandergepresst werden, von ihren Krümmungsradien und von ihren Elastizitätsmodulen.

Im Nachfolgenden wird ferner der Begriff der Balligkeit eine gewichtige Rolle spielen. Unter der Balligkeit versteht man eine schwache (konvexe) Wölbung von Flächen, z.B. von Flächen an Maschinenteilen oder Werkzeugen. Mittels der Balligkeit können ungünstige (punktförmige) Druck- oder Kraftspitzen, z.B. in der Nähe von Kanten, vermieden werden. So sind z.B. die Flanken von Zahnrädern oder die Laufflächen von Riemenscheiben ballig ausgebildet.

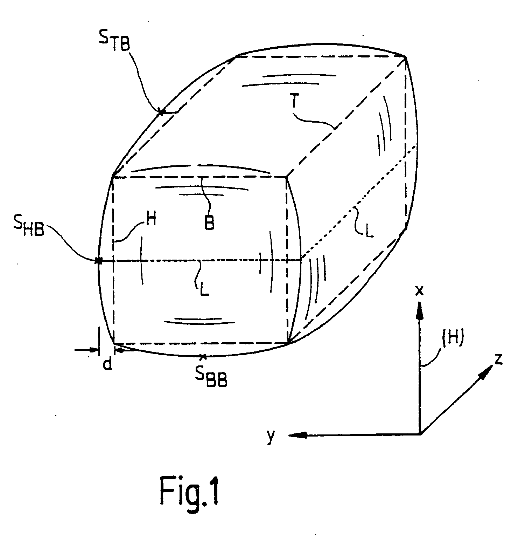

In Fig. 1 ist die Balligkeit exemplarisch an Hand eines Quaders schematisch dargestellt, der durch eine gestrichelte Linie angedeutet ist. Der in Fig. 1 in einer perspektivischen Ansicht gezeigte Quader weist eine Höhe H, eine Breite B und eine Tiefe T auf. Ferner ist ein kartesisches Koordinatensystem mit den Achsen X, Y und Z zur Vereinfachung der Erklärung dargestellt.

Zur Erläuterung der Höhenballigkeit wird in Fig. 1 die linke Kante der Vorderseite des Quaders herangezogen. Im Falle eines Quaders ohne Balligkeit ist diese Kante (gestrichelte Linie) parallel zur X-Achse orientiert. Die X-Achse stellt dabei die Höhe des Quaders dar. Soll die Stirnfläche des Quaders eine Höhenballigkeit aufweisen, so wird die XY-Ebene in negativer Z-Richtung aufgebläht. Bei symmetrischer Höhenballigkeit kann dies beispielsweise entlang der Seitenhalbierenden bezüglich der Höhe H geschehen. In diesem Fall liegt der Scheitelpunkt S_{HB} der Höhenballigkeit auf der Höhe H/2. Der Scheitelpunkt S_{HB} der Höhenballigkeit ist dadurch gekennzeichnet, dass dort der Abstand d zur X-Achse eines "normalen" Quaders am größten ist.

Auf ähnliche Weise können die übrigen Außenseiten des Quaders "aufgebläht" werden.

Verbindet man die Scheitelpunkte S_{HB} der Höhenballigkeit entlang des Umfangs des balligen Quaders, wie sie durch Punkte dargestellt sind, miteinander, so erhält man die sog. Leitkurve L der Höhenballigkeit.

Die Leitkurve L der Höhenballigkeit stellt eine Linie dar, mit der der ballige Quader beispielsweise eine Wand berühren würde, würde man den balligen Quader, vorausgesetzt die Unterseite des Quaders ist nicht gewölbt, auf den Boden legen und diesen gegen selbige Wand schieben.

Es ist daher Aufgabe der vorliegenden Erfindung, einen verbesserten Nutfolger zu schaffen, der weniger schnell verschleißt.

Diese Aufgabe wird mit einem Nutfolger der eingangs erwähnten Art dadurch gelöst, dass die Lage der Scheitelpunkte der Höhenballigkeit so gewählt ist, dass die Leitkurve im Wesentlichen dem Wirkdurchmesser der Schaltwalze entspricht.

Dadurch entsteht ein optimales Trag- bzw. Kontaktbild zwischen den sich berührenden Flächen bzw. Flanken des Nutfolgers und der Schaltwalzennut, da eine mittige Ausprägung des Kontakts in der Schaltwalzennut bezüglich der Höhe der Nutflanke möglich wird.

Ebenfalls dadurch bedingt ist ein geringerer Verschleiß und eine schwächere Deformation der Flanken der sich berührenden Schaltwalze und des NutfoLgers.

Dies hat zur Folge, dass sich die Form der Schaltwalzennut weniger ändert, womit die Funktion der Gesamtschaltung sicherer wird.

Ferner erhöht sich die Lebensdauer.

Schließlich können Materialien sowohl für den Nutfolger als auch die Schaltnut verwendet werden, die geringeren Anforderungen an die Materialfestigkeit genügen müssen.

Der Schaltmittelpunkt der Hertzschen Druckellipse liegt im Wesentlichen auf der Linie des Wirkdurchmessers der Schaltwalze.

Die tatsächlich sich einstellenden Berührungspunkte entsprechen den theoretisch vorberechneten Punkten.

Ferner ist es bevorzugt, wenn die Höhenballigkeit nicht nur entlang den Kontaktflächen des Nutfolgers mit der Schaltnut, sondern auch entlang des gesamten Umfangs des Nutfolgers vorgesehen ist.

Durch diese Maßnahme kann erreicht werden, dass, sollte sich die Orientierung des Nutfolgers relativ zu der Schaltwalze und somit zu der Schaltnut ändern, der Nutfolger trotzdem entlang des Wirkdurchmessers mit einer entsprechenden Flanke der Schaltnut in Berührung kommt.

Ferner ist es bevorzugt, wenn der Nutfolger ein Gleitstein ist.

Wie nachfolgend noch detaillierter erklärt werden wird, weist ein Gleitstein gewöhnlich eine (rhombusähnliche) oder rautenförmige Grundfläche auf, wobei die Eckpunkte abgerundet sind und der Gleitstein vorzugsweise mit seinen im Wesentlichen geradlinigen Flächen mit der Schaltnut in Kontakt tritt. Diese Kontaktflächen gewährleisten ein sicheres Zusammenwirken des Nutfolgers mit der Schaltnut, da es zu einem flächigen Kontakt derselben kommt.

Gemäß einer bevorzugten Ausführungsform weist der Nutfolger eine Kontaktschräge auf, wobei die Längsballigkeit des Nutfolgers entlang der Kontaktschräge ausgebildet ist.

Durch die Längsballigkeit wird ebenfalls die Hertzsche Pressung vermindert, und zwar nicht nur in Höhen-, sondern auch in Umfangsrichtung der Schaltnut.

Außerdem hat es sich als vorteilhaft herausgestellt, wenn eine dem Boden der Schaltnut gegenüber liegende Fläche des Nutfolgers eine Krümmung aufweist, die im Wesentlichen einer Krümmung der Schaltnut entspricht.

Durch diese Maßnahme wird gewährleistet, dass der Nutfolger in einem Zustand, bei dem der Nutfolger in die Schaltnut eingreift, möglichst tief in die Schaltnut selbst eindringen kann, so dass die Schaltsicherheit weiter erhöht wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Quaders mit einer Höhenballigkeit und einer Längsballigkeit entlang seines Umfangs;
- Fig. 2: zwei schematische perspektivische Ansichten eines Gleitsteins;
- Fig. 3: eine Schnittansicht entlang der Linie III-III des Gleitsteins nach Fig. 2;
- Fig. 4A bis 4D: verschiedene Ansichten eines weiteren Gleitsteins;
- Fig. 5: einen Gleitstein gemäß Fig. 1, wie er in eine Schaltwalze bzw. deren Schaltnut eingreift inkl. zugehöriger Berührungsellipse;
- Fig. 6: eine Verteilung von Scheitelpunkten der Höhenballigkeit entlang des Umfangs eines Gleitsteins;
- Fig. 7: einen Gleitstein gemäß der Erfindung, der in eine Schaltnut eingreift;
- Fig. 8A bis 8D: verschiedene Ansichten des Gleitsteins der Fig. 7;
- Fig. 9A bis 9D: verschiedene Ansichten einer weiteren Ausführungsform eines Gleitsteins gemäß der vorliegenden Erfindung; und
- Fig. 10: zwei schematische perspektivische Ansichten des Gleitsteins der Fig. 9.

Wie bereits oben erwähnt zeigt Fig. 1 einen Quader in gestrichelten Linien, der ballig ausgebildet ist (durchgezogene Linie).

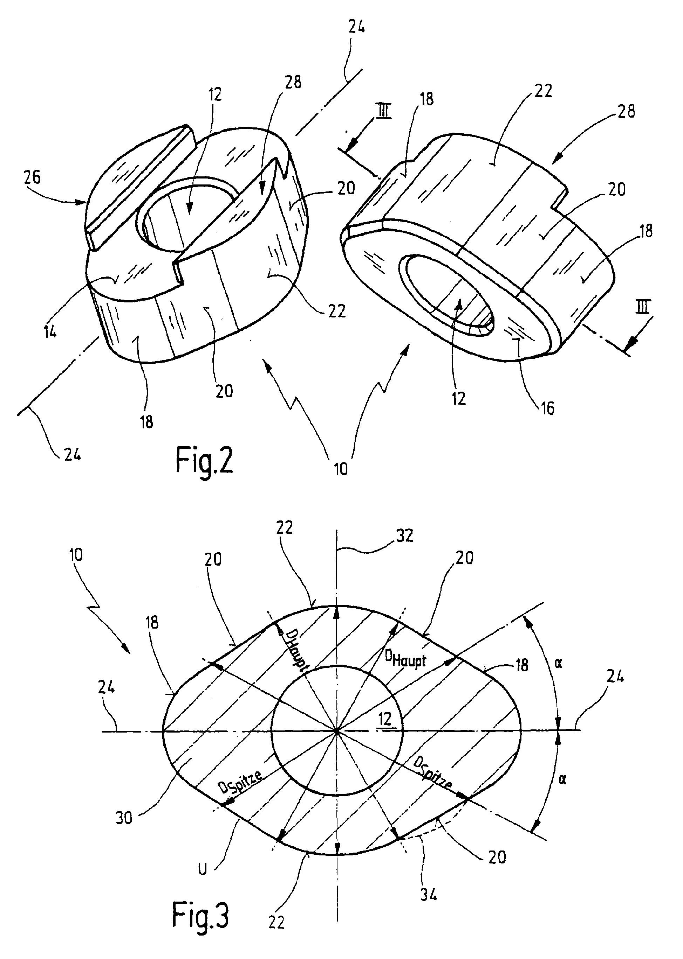

Fig. 2 zeigt einen Gleitstein 10 in zwei schematischen perspektivischen Ansichten, nämlich in einer Ansicht von oben links und von unten rechts. Der Gleitstein 10 weist eine (optionale) Öffnung 12 in Richtung seiner Höhe auf. In die Öffnung 12 lassen sich Elemente (nicht dargestellt) einführen, mit dem der Gleitstein 10 beispielsweise mit einer Schaltgabel (nicht dargestellt) gekoppelt werden kann.

Der Gleitstein weist eine Oberseite 14 und eine Unterseite 16 auf, die bei dem in Fig. 2 dargestellten Beispiel parallel zueinander ausgebildet sind. Der Umfang des Gleitsteins 10 wird aus mehreren Flankenelementen 18, 20 und 22 gebildet.

Die Längsachse 24 ist bei dem in Fig. 2 links dargestellten Gleitstein 10 strichpunktiert veranschaulicht.

Ferner weist die oberseite 14 zwei Erhöhungen 26 und 28 auf, die für die Funktion der Erfindung jedoch weniger von Bedeutung sind und deshalb nicht näher erläutert werden.

Mittels den Flankenelementen 18 bis 22 wird der Gleitstein 10 in einer Schaltnut (nicht dargestellt) einer Schaltwalze (nicht dargestellt) geführt bzw. geleitet.

In Fig. 3 ist eine schematische Schnittansicht entlang der Linie III-III des in der Fig. 2 rechts dargestellten Gleitsteins 10 veranschaulicht.

Die in Fig. 3 dargestellte Schnittfläche 30 ist in Bezug auf die in Fig. 2 dargestellten Gleitsteine 10 parallel zu dem Oberseiten 14 bzw. Unterseiten 16 orientiert. Somit ist die Schnittfläche 30 senkrecht zur Höhe (nicht dargestellt) orientiert. Die Fläche 30 weist eine kreisförmige Aussparung auf, die durch die Öffnung 12 bedingt ist.

Die äußere Umrisslinie U der Fläche 30 wird durch mehrere Flankenelemente 18 bis 22 gebildet. Mittels einer weiteren strichpunktierten Linie 32, die senkrecht zur Längsrichtung 24 orientiert ist, wird die Breite des Gleitsteins 10 verdeutlicht. Im Bereich einer Hauptflanke 22 ist die Außenfläche des Gleitsteins 10 in Umfangsrichtung mit einem Radius gekrümmt, der der Hälfte eines Hauptdurchmessers D_{Haupt} entspricht.

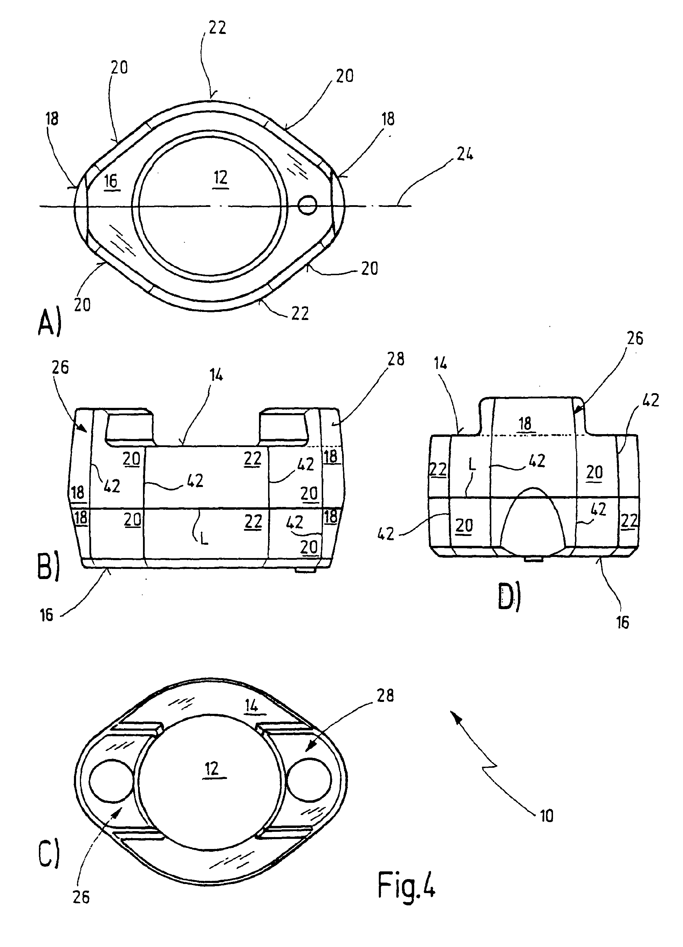

An die Hauptflanken 22 schließt sich jeweils eine Kontaktschräge 20 an (vgl. auch Fig. 2). Die Kontaktschräge 20 ist nahezu geradlinig, d.h. eben bezogen auf die Fläche, ausgebildet, abgesehen von ihrer Längsballigkeit, die zur Veranschaulichung übertrieben mittels einer gestrichelten Linie 34 im rechten unteren Teil der Schnittfläche 30 dargestellt ist. Eine Balligkeit entlang des Umrisses U der Schnittfläche 30 wird nachfolgend allgemein als Längsballigkeit bezeichnet werden, wobei nicht zwischen Länge und Breite des Gleitsteins 10 unterschieden werden wird. Der ebenfalls verwendete Begriff der Höhenballigkeit wird im Zusammenhang mit Fig. 4D noch näher erläutert werden.

Die Kontaktschrägen 20 der Fig. 3 stellen in der Regel diejenigen Teile des Gleitsteins 10 dar, die mit der Schaltnut (nicht dargestellt) bzw. deren Nutflanken (nicht dargestellt) zusammenwirken. Da die Schaltnut, wie eingangs erwähnt, sog. Schaltzacken aufweist, um einen Gang zwischen einer Neutralstellung und einer Stellung, bei der der Gang eingelegt ist, zu bewegen, sind die Nutflanken in der Regel im Bereich von Schaltzacken relativ zum Umfang einer Schaltwalze ebenfalls angeschrägt, so dass es gewöhnlich zu einer flächigen Berührung zwischen den Kontaktschrägen und den Nutflanken der Schaltnut der Schaltwalze beim Wechseln eines Ganges kommt.

An die Kontaktschrägen 20 schließen sich jeweils Spitzenflanken 18 an. Die Spitzenflanken 18 bilden in Längsrichtung 24 den Kopf bzw. das Ende des Gleitsteins 10. Die Spitzenflanken 18 überdecken einen Spitzenwinkel von 2α und sind mit dem halben Durchmesser D_{spitze} abgerundet.

Fig. 4A bis 4D zeigen einen weiteren Gleitstein 40.

Fig. 4A zeigt den Gleitstein 40 von unten. Fig. 4B zeigt den Gleitstein 40 von der Seite. Fig. 4C zeigt den Gleitstein 40 in Draufsicht. Fig. 4D zeigt den Gleitstein 40 aus Längsrichtung 24 betrachtet. Dies entspricht der Vorderansicht. Merkmale, die ähnlich zu denen des Gleitsteins sind, wie er in Fig. 2 gezeigt ist, sind mit gleichen Bezugszeichen versehen.

Der in Fig. 4 dargestellte Gleitstein unterscheidet sich im Wesentlichen von dem in Fig. 2 dargestellten Gleitstein 10 dadurch, dass der Gleitstein 40 der Fig. 4 seine Erhöhungen 26 und 28 nicht im mittleren Bereich vorgesehen hat, die im Wesentlichen durch die Hauptflanken 22 begrenzt werden. Die Erhebungen 26 und 28 sind in den Stirnbereichen vorgesehen, die im Wesentlichen durch die Spitzenflanken 18 nach außen begrenzt werden.

In den Fig. 4B und 4D ist ferner eine Leitkurve L der Höhenballigkeit dargestellt. Diese verläuft bei herkömmlichen Gleitsteinen parallel zu den Flächen 14 und 16, die die Ober- bzw. Unterseite des Gleitsteins 40 bilden. Ferner ist an Hand der Hilfslinien 42 gut erkennbar, dass diese bezüglich der Richtung der Höhe ballig ausgebildet sind. Dies äußert sich dadurch, dass es sich bei den Hilfslinien 42, die die Übergänge zwischen den verschiedenen Flankenelementen 18 bis 22 darstellen, um gekrümmte Linien mit einem vorgegebenen Krümmungsradius handelt. Man erkennt ferner, dass die Scheitelpunkte der Höhenballigkeit pro Umfangseinheitselement alle auf der gleichen Höhe liegen, anderenfalls wäre die Leitkurve L der Höhenballigkeit auch nicht parallel zu den Flächen 14 und 16 angeordnet.

In Fig. 5 ist der Gleitstein 10 der Fig. 2 schematisch im Eingriff mit einer teilweise dargestellten Schaltwalze 44 zu sehen. Dabei betrachtet man den Gleitstein 10 und die Schaltwalze 44 aus Axialrichtung der Schaltwalze 44. Die Achse der Schaltwalze 44 ist mit 46 bezeichnet.

Die Schaltwalze 44 weist einen Außenradius r_{außen} auf. Ferner ist in Umfangsrichtung der Schaltwalze 44 eine Schaltnut 48 schematisch angedeutet, wobei die Tiefe der Schaltnut 48 mit dem Bezugszeichen 50 angedeutet ist. Die Tiefe 50 der Schaltnut 48 berechnet sich aus der Differenz des Außenradius r_{außen} und einem Innenradius rᵢₙₙₑₙ. Die Tiefe 50 der Schaltnut 48 liegt allgemein in der Größenordnung der Höhe des Gleitsteins 10 ohne Erhebung 26 oder 28.

In Fig. 5 ist auch die Leitkurve L der Höhenballigkeit des Gleitsteins 10 dargestellt. Ferner ist in Fig. 5 der sog. Wirkradius r_{wirk} eingezeichnet. Der Wirkradius r_{wirk} bzw. der Wirkdurchmesser ist ein Funktionsparameter, auf dem die theoretische Auslegung der gesamten Schaltwalzengeometrie und somit der gesamten Aktuatorikschaltung basiert. Entlang des Wirkdurchmessers berühren sich die Gleitsteinflanken und die Schaltwalzennutflanken idealerweise.

Auf Grund der Hertzschen Pressung bildet sich jedoch bei Drehung der Schaltwalze 44 in Drehrichtung 52 eine Druckellipse 54 aus.

Wie man unschwer erkennt, liegt die Ellipse 54 im Wesentlichen oberhalb des Wirkdurchmessers. Die Gleitsteinflanken 18 und 20 eilen dem idealen Berührpunkt, d.h. dem Wirkdurchmesser, voraus. Somit verschiebt sich der Berührpunkt des Gleitsteins 10 in Richtung der Spitzenflanke 18 des Gleitsteins 10 und der Außenkante der Schaltwalzennut, die durch r_{außen} gebildet wird.

Dies kann zu Beschädigungen und Funktionsausfällen in hoch belasteten Bereichen der Schaltwalzennut, z.B. an einem Synchronisationspunkt oder Durchschaltpunkt, führen. Die Verschiebung des Mittelpunkts der Druckellipse 54 relativ zur Linie 56 des Wirkdurchmessers führt zu einer nicht definierbaren Abweichung der sich einstellenden Werte relativ zu den theoretisch vorherbestimmten Werten. Diese Effekte treten verstärkt bei kleinen Wirkdurchmessern der Schaltwalze 44 auf.

Diese negativen Effekte werden gemäß der vorliegenden Erfindung dadurch behoben, dass die Scheitelpunkte der Höhenballigkeit entlang dem Umfang eines Gleitsteins so angeordnet werden, dass sie im Wesentlichen mit der Linie 56 des Wirkdurchmessers zusammenfallen.

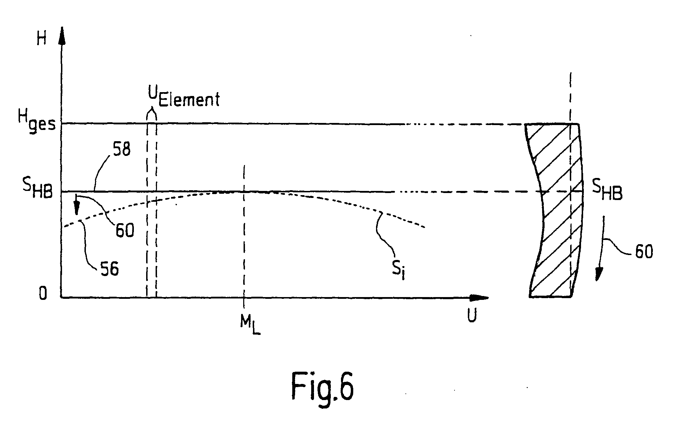

Dies ist schematisch in Fig. 6 dargestellt, bei der die Höhe eines Gleitsteins gegenüber dem Umfang eines Gleitsteins aufgetragen ist.

Mit dem Bezugszeichen M_{L} ist eine der beiden breitesten Stellen eines Gleitsteins angedeutet. Der in Fig. 6 theoretisch betrachtete Gleitstein weist eine Gesamthöhe H_{ges} auf. Bei einem Gleitstein gemäß dem Stand der Technik liegen alle Scheitelpunkte S_{HB} der Höhenballigkeit auf einer Linie 58, wie es exemplarisch in den Fig. 1 und 4B/D mit "L" dargestellt ist.

Gemäß der vorliegenden Erfindung werden die Scheitelpunkte S_{HB} der Höhenballigkeit pro Umfangseinheitselement U_{Element} in Richtung der Linie 56 des Wirkdurchmessers "verschoben".

Im rechten Teil der Fig. 6 ist teilweise ein Schnitt durch einen erfindungsgemäßen Gleitstein an der Stelle M_{L} senkrecht zur Längsachse dargestellt. Der Scheitelpunkt S_{HB} der Höhenballigkeit befindet sich dort am erwarteten Ort. Entfernt man sich nun jedoch von der Stelle M_{L}, so wandert der Scheitelpunkt S_{HB} gemäß der vorliegenden Erfindung in Richtung des Pfeils 60.

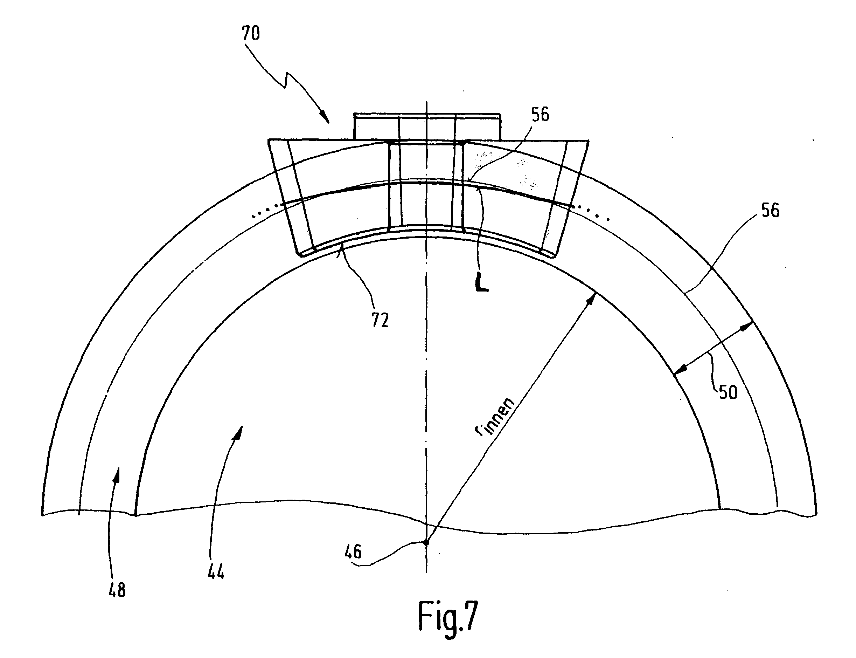

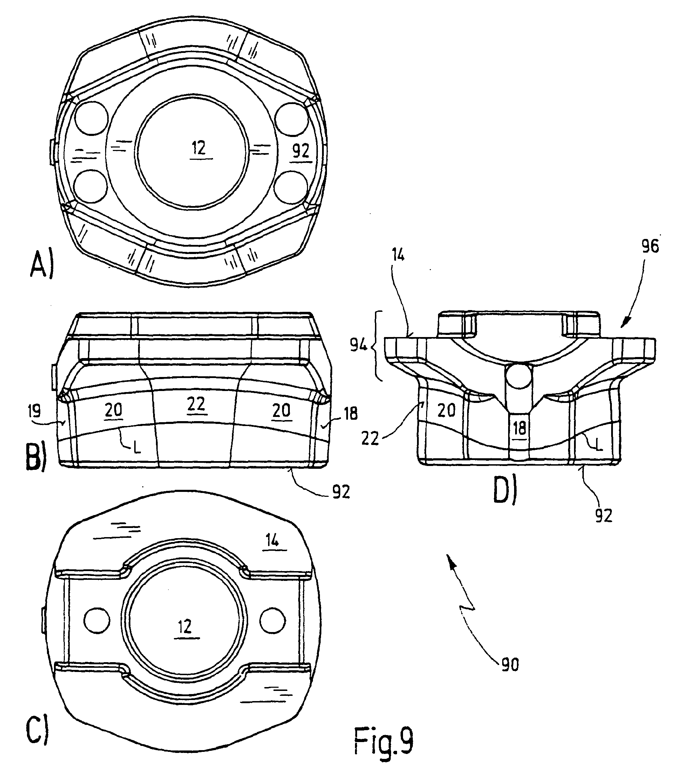

In Fig. 7 ist ein Gleitstein 70 gemäß der vorliegenden Erfindung gezeigt, der eine gekrümmte Leitkurve L der Höhenballigkeit aufweist. Der Gleitstein 70 weist ferner eine dem Innenradius rᵢₙₙₑₙ angepasste, gekrümmte Unterseite 72 auf. Dies stellt jedoch lediglich eine bevorzugte Ausführungsform dar. Die Unterseite kann auch weiterhin ohne Krümmung ausgebildet werden, wie es aus Fig. 9 ersichtlich werden wird.

Der Gleitstein 70 ist ähnlich zu den Gleitsteinen 10 bzw. 40 der Fig. 1 und 4 aufgebaut. Im Nachfolgenden werden lediglich die Unterschiede genauer erläutert werden.

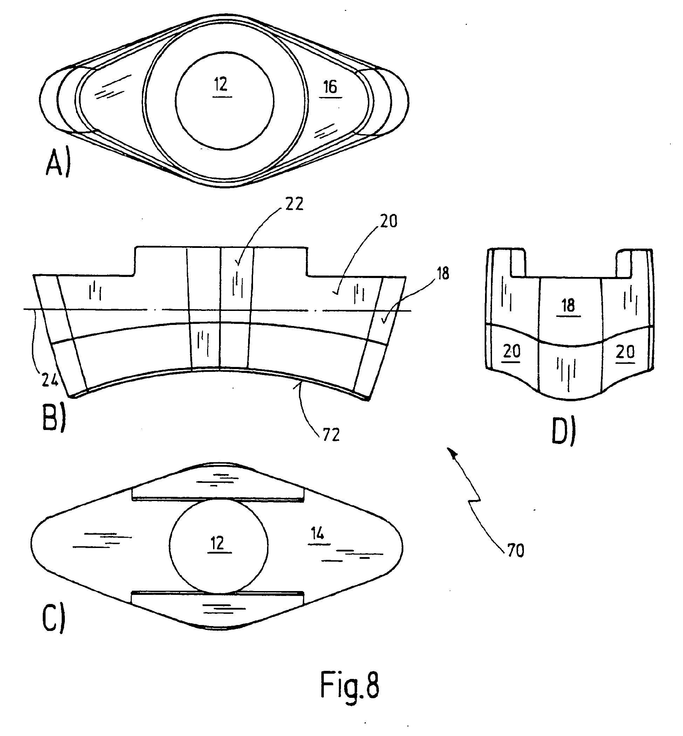

Fig. 8 zeigt den Gleitstein 70 der Fig. 7 detaillierter. Fig. 8A zeigt eine Unteransicht des Gleitsteins 70. Fig. 8B zeigt eine Seitenansicht des Gleitsteins 70. Fig. 8C zeigt eine Draufsicht des Gleitsteins 70. Fig. 8D zeigt eine Ansicht in Längsrichtung 24. Dies entspricht der Vorderansicht.

In Fig. 9 ist eine weitere Ausführungsform eines Gleitsteins 90 gemäß der vorliegenden Erfindung gezeigt, wobei eine Unterseite 92 keine Krümmung aufweist.

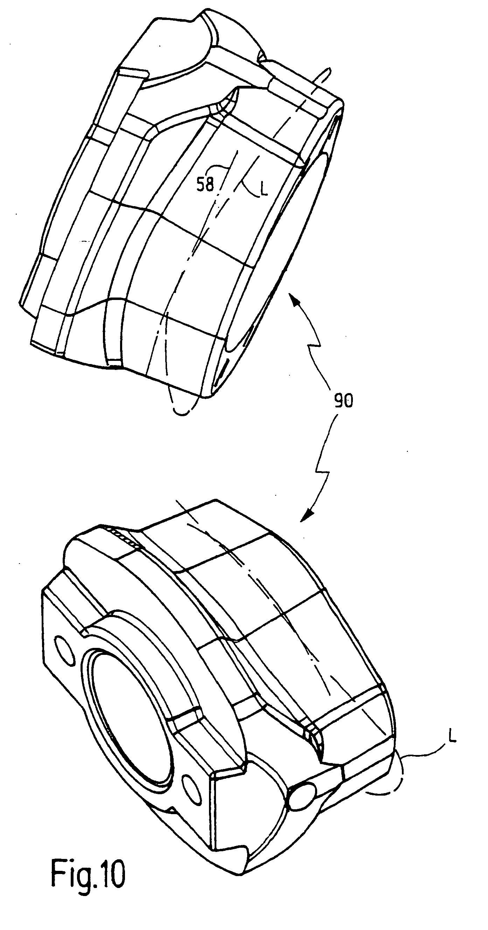

Fig. 10 zeigt den Gleitstein 90 gemäß der Fig. 9 in zwei schematischen, perspektivischen Ansichten.

Wie aus Fig. 9D ersichtlich weist der Gleitstein 90 in einem oberen Bereich 94 einen Bund 96 auf, der hinsichtlich seiner Breite größer als die Breite einer Schaltnut ist, so dass der Gleitstein 90 in einem eingreifenden Zustand mit seinem Bereich 94 seitlich über die Schaltnut hinausragt.

Es versteht sich, dass verschiedene Parameter des Gleitsteins bzw. eines Nutfolgers, wie z.B. die Balligkeitsradien, der Spitzwinkel α, der Krümmungsdurchmesser usw. verändert werden können, um die räumliche Lage des Kontaktbildes zwischen Gleitsteinflanke und Schaltwalzennutflanke weiter zu optimieren.

Durch die vorliegende Erfindung wird der Verschleiß bzw. die Deformation der Schaltwalzennut minimiert und die Betriebssicherheit sowie die Lebensdauer der Schaltwalzenaktuatorik erhöht. Ferner können erhebliche Kosten eingespart werden. Außerdem erzielt man die in der theoretischen Auslegung des Aktuators festgelegten Parameter auch in der Realität. Der Krümmungsradius der Leitkurve darf auch leicht vom Krümmungsradius des Wirkdurchmessers abweichen (vgl. Fig- 7), ohne dass die durch die Erfindung ermöglichte FunktionaLität wesentlich eingeschränkt wird.

Durch eine Abweichung der Krümmungsradien kann jedoch die Lage der Druckellipse optimiert werden.

Sollte die Form einer Schaltwalze von der Rotationssymmetrie abweichen, so dass auch der Querschnitt der Schaltnut nicht länger rotationssymmetrisch ist, muss der Begriff des Wirkdurchmessers durch Wirklinie ersetzt werden.

## Patentansprüche

1. Nutfolger (70; 90) zum Zusammenwirken mit einer Schaltnut (48) einer Schaltwalze (44) eines Stufengetriebes für ein Kraftfahrzeug, wobei der Nutfolger (70; 90) eine Höhenballigkeit und eine Längsballigkeit aufweist und die Schaltnut (48) einen Wirkdurchmesser definiert, entlang dem der Nutfolger (70; 90) in einem Zustand, bei dem der Nutfolger (70; 90) in die Schaltnut (48) eingreift, geleitet werden soll, und wobei die Gesamtheit aller Scheitelpunkte (S_{HB}) der Höhenballigkeit eine Leitkurve (L) entlang des Umfangs des Nutfolgers bildet, **dadurch gekennzeichnet, dass** die Lage der Scheitelpunkte der Höhenballigkeit so gewählt ist, dass die Leitkurve (L) im Wesentlichen dem Wirkdurchmesser der Schaltwalze (44) entspricht.

2. Nutfolger nach Anspruch 1, **dadurch gekennzeichnet, dass** die Höhenballigkeit nicht nur entlang Kontaktflächen (18, 20) mit Nutflanken der Schaltnut (48), sondern auch entlang des gesamten Umfangs (U) des Nutfolgers (70; 90) vorgesehen ist.

3. Nutfolger nach Anspruch 1 oder 2, **dadurch gekennzeichnet, dass** der Nutfolger (70; 90) ein Gleitstein ist.

4. Nutfolger nach Anspruch 3, **dadurch gekennzeichnet, dass** der Nutfolger (70; 90) eine Kontaktschräge (20) aufweist, wobei die Längsballigkeit des Nutfolgers (70; 90) entlang der Kontaktschräge ausgebildet ist.

5. Nutfolger nach einem der Ansprüche 1 bis 4, **dadurch gekennzeichnet, dass** eine dem Boden der Schaltnut (48) gegenüber liegende Fläche (72; 92) des Nutfolgers (70; 90) eine Krümmung aufweist, die im Wesentlichen einer Krümmung der Schaltnut (48) entspricht.

## Claims

1. Groove follower (70; 90) for cooperating with a shift groove (48) of a shift drum (44) of a multi-step transmission for motor vehicle, the groove follower (70; 90) having a vertical crowning and a longitudinal crowning, wherein the shift groove (48) defines an active diameter along which the groove follower (70; 90) is to be guided in a state in which the groove follower (70; 90) engages into the shift groove (48), and wherein the entirety of all vertices (S_{HB}) of the vertical crowning forms a guide curve (L) along the circumference of the groove follower, **characterized in that** the location of the vertices of the vertical crowning is selected such that the guide curve (L) substantially corresponds to the active diameter of the shift drum (44).

2. Groove follower of claim 1, **characterized in that** the vertical crowning is not only provided along contact surfaces (18, 20) with groove flanks of the shift groove (48) but also along the entire circumferences (U) of the groove follower (70; 90).

3. Groove follower of claim 1 or 2, **characterized in that** the groove follower (70; 90) is a sliding block.

4. Groove follower of claim 3, **characterized in that** the groove follower (70; 90) comprises a contact slope (20), wherein the longitudinal crowning of the groove follower (70; 90) is formed along the contact slope.

5. Groove follower of one of claims 1 to 4, **characterized in that** a surface (72; 92) of the groove follower (70; 90) facing the bottom of the shift groove (48) has a curvature corresponding substantially to a curvature of the shift groove (48).

## Revendications

1. Suiveur de rainure (70 ; 90) destiné à coopérer avec une rainure de sélection (48) d'un barillet de sélection (44) d'une boîte de vitesses d'un véhicule automobile, le suiveur de rainure (70 ; 90) présentant un bombement en hauteur et un bombement en longueur et la rainure de sélection (48) définissant un diamètre actif, le long duquel le suiveur de rainure (70 ; 90) doit être guidé dans un état dans lequel le suiveur de rainure (70 ; 90) vient en prise dans la rainure de sélection (48) et dans lequel l'intégralité des points de sommet (S_{HB}) du bombement en hauteur forme une courbe de guidage (L) le long de la périphérie du suiveur de rainure, **caractérisé en ce que** l'emplacement des points de sommet du bombement en hauteur est sélectionné de telle manière que la courbe de guidage (L) corresponde sensiblement au diamètre actif du barillet de sélection (44).

2. Suiveur de rainure selon la revendication 1, **caractérisé en ce que** le bombement en hauteur est prévu non seulement le long des surfaces de contact (18, 20) avec les flancs de la rainure de sélection (48), mais également le long de toute la périphérie (U) du suiveur de rainure (70 ; 90).

3. Suiveur de rainure selon la revendication 1 ou 2, **caractérisé en ce que** le suiveur de rainure (70 ; 90) est un coulisseau.

4. Suiveur de rainure selon la revendication 3, **caractérisé en ce que** le suiveur de rainure (70 ; 90) comporte un chanfrein de contact (20), le bombement en longueur du suiveur de rainure (70 ; 90) étant prévu le long du chanfrein de contact.

5. Suiveur de rainure selon l'une des revendications 1 à 4, **caractérisé en ce qu'**une surface (72 ; 92) du suiveur de rainure (70 ; 90) placée à l'opposé du fond de la rainure de sélection (48) présente une courbure qui correspond sensiblement à une courbure de la rainure de sélection (48).
